# EUROPÄISCHE PATENTSCHRIFT

(11) **EP 1 007 860 B1**
(45) Veröffentlichungstag und Bekanntmachung des Hinweises auf die Patenterteilung: **04.06.2003**
(21) Anmeldenummer: 98949878.7
(22) Anmeldetag: 06.08.1998
(51) Int. Cl.: F16C 11/02, F16B 35/04

(54) **LAGERELEMENT FÜR VERSTELLEINRICHTUNGEN IN KRAFTFAHRZEUGEN**
BEARING ELEMENT FOR REGULATING DEVICES IN MOTOR VEHICLES
ELEMENT DE PALIER POUR DISPOSITIF DE REGLAGE DANS DES VEHICULES A MOTEUR

(30) Priorität: 06.08.1997 DE 19734785
(43) Veröffentlichungstag der Anmeldung: 14.06.2000
(73) Patentinhaber: Brose Fahrzeugteile GmbH & Co. KG Coburg, 96450 Coburg (DE)
(72) Erfinder: SCHUMANN, Peter, D-96253 Untersiemau (DE); GEIGLE, Stephan, D-96450 Coburg (DE); FREISLEBEN, Bernd, D-96231 Staffelstein (DE); MACHT, Alwin, D-96250 Ebensfeld (DE)
(74) Vertreter: Baumgärtel, Gunnar, Dr.
(86) Internationale Anmeldenummer: DE9802319
(87) Internationale Veröffentlichungsnummer: WO99008011

(56) Entgegenhaltungen:
- DE-U- 8 713 936
- US-A- 4 480 951
- US-A- 5 033 900

## Beschreibung

Die Erfindung betrifft ein Lagerelement für Verstelleinrichtungen in Kraftfahrzeugen nach dem Oberbegriff des Anspruchs 1.

Ein derartiges Lagerelement findet beispielsweise bei der Verbindung beweglicher Bauteile von Fensterhebern oder Sitzverstellungseinrichtungen Anwendung.

Solche Lagerelemente sind beispielsweise Lagerbolzen, die durch entsprechend vorgefertigte Öffnungen, üblicherweise Durchgangsbohrungen, von Bauteilen bis zu einem Anschlag hindurchgeführt und anschließend vernietet werden. Ein solches Lagerelement ist beispielsweise in der DE 34 16 103 A1 beschrieben.

In der DE-U-87 13 936 ist eine Halterung zum Befestigen einer Leuchte an einer Fahrzeugkarosserie beschrieben, bei der ein Bolzen durch eine Bohrung in einen aus Kunststoff geformten Tragteil gedrückt wird. An dem Bolzen ist ein gerändelter Abschnitt vorgesehen, an dessen in Einführrichtung rückwärtiger Seite sich eine Einschnürung anschließt, in die der zunächst nach außen gedrückte Kunststoff eindringt und so den Bolzen an dem Tragteil unbeweglich festlegt. Eine drehbare Lagerung eines Getriebeelementes oder des Tragteiles ist nicht vorgesehen, ebenso wenig wie eine Aufweitung des Bohrungsdurchmessers mittels einer Schneide.

In der US-4,480,951 ist eine Schraube mit einem Gewinde vorgesehen, bei der in dem vorderen Bereich eine Schneidplatte eingesetzt ist, um weiches Beschichtungsmaterial vor dem eigentlichen Einschraubvorgang zu entfernen. An der Schneidplatte sind herauskragende Schneidflügel mit einer Sollbruchstelle vorgesehen, die bei Kontakt mit dem Basismaterial abbrechen.

Die US 5,033,900 beschreibt eine Anordnung zum drehbaren Verbinden zweier Teile miteinander, bei der ein Niet durch eine zylindrische Bohrung eines ersten Bauteiles und eine nicht zylindrische Bohrung des zweiten Teiles hindurchgeführt wird und die beiden Teile anschließend miteinander vernietet werden. Der Niet wird durch den Einführ- bzw. Vernietungsvorgang in das nicht zylindrische Loch drehfest mit dem zweiten Bauteil verbunden; und das erste Bauteil kann auf einem separaten, an dem Niet vorgesehenen Lagerungsbereich verschwenkt werden. Der Niet weist keinen Werkzeugbereich, mit Schneiden auf, die mittels einer Rotationsbewegung eine Öffnung aufweiten.

Nachteilig an den bekannten Vorrichtungen ist, daß die Öffnungen der zu lagernden Bauteile mit sehr geringen Toleranzen gefertigt werden müssen, um eine zufriedenstellende Lagerung zu erreichen. Insbesondere bei nachträglich lackierten Bauteilen kann es durch den Farbauftrag zu Durchmesseränderungen kommen.

Der Erfindung liegt die Aufgabe zugrunde, ein Lagerelement für Verstelleinrichtungen in Kraftfahrzeugen zu schaffen, das mit einfachen Mitteln herzustellen und zu montieren ist und das unempfindlich gegenüber Toleranzschwankungen der Durchgangsöffnungen der zu lagernden Bauteile ist.

Diese Aufgabe wird durch ein Lagerelement mit den Merkmalen des Anspruchs 1 gelöst.

Durch eine selbstkalibrierende Ausbildung des Lagerelements wird die Öffnung des Getriebeelements auf den erforderlichen Durchmesser aufweitbar, wozu das Lagerelement einen Werkzeugbereich mit zumindest einer Schneide aufweist. Mit dieser Schneide wird eine vorgefertigte Öffnung des zu lagernden Bauteils (z.B. eines Verstell- oder Getriebeelements wie Zahnrad, Zahnhebel oder Schwenkarm) in ihrem Durchmesser vergrößert, um exakt die erforderlichen Lagerungsbedingungen zwischen Lagerelement und Getriebeelement herzustellen. In diesem Zusammenhang werden als Getriebelemente diejenigen Bauteile angesehen, die zwischen einer krafterzeugenderi Vorrichtung (z.B. Elektromotor) und dem zu verstellenden Bauteil bzw. der zu verstellenden Einrichtung angeordnet sind.

Aus der DE 25 37 584 A1 ist zwar ein selbstkalibrierendes Befestigungselement bekannt, das Mittel zur Selbstkalibrierung in Form eines selbstkalibrierenden Werkzeugbereichs aufweist, der beim Durchziehen durch eine Werkstückbohrung die Bohrung kalibrierend aufweitet. Der Gegenstand dient jedoch lediglich zur Festlegung zweier Bauteile mittels einer Preßpassung. Eine Verwendung der beschriebenen Anordnung zum Zwecke der Lagerung eines Getriebeelementes an Verstellvorrichtungen in Kraftfahrzeugen, z.B. als Gelenkbolzen in einem Fensterheber, ist nicht vorgesehen.

Bei dem erfindungsgemäßen Lagerelement ist die Schneide des Werkzeugbereichs derart angeordnet, daß der Durchmesser der Öffnung mittels einer Rotationsbewegung des Lagerelements um seine Längsachse aufweitbar ist. Dadurch kann auf einfache Weise, beispielsweise mit einem angetriebenen Schraubwerkzeug leicht die Verstelleinrichtung mit dem Lagerelement und dem Getriebeelement montiert werden.

Weiterhin schließt sich der Lagerungsabschnitt unmittelbar an den Werkzeugbereich an, wodurch eine einfache Montage ermöglicht wird.

Das Lagerelement verfügt über einen zylinderförmigen Lagerungsabschnitt, auf dem mindestens ein Bauteil mit einer Öffnung drehbar oder drehfest gelagert oder befestigt werden kann. Die Öffnung des zu lagernden Bauteils weist ein Untermaß auf und ist vor dem Aufstecken auf den Lagerungsabschnitt mittels eines selbstkalibrierenden Werkzeugbereichs in einem mit dem Reiben, Fräsen oder Aufbohren ver gleichbaren Bearbeitungsverfahren auf einen definierten Durchmesser erweiterbar. Der selbstkalibrierende, mit einer oder mehreren Schneiden versehene Werkzeugbereich wird bei einer Rotation des Lagerelements um seine Längsachse in die Öffnung eingeführt. Die Schneiden führen dabei eine rotatorische Schnittbewegung und eine lineare, in axialer Richtung verlaufende Vorschubbewegung aus und ermöglichen so eine spanende und/oder oberflächenglättende Bearbeitung der Öffnung. Werden mehrere Bauteile auf dem Lagerungsabschnitt gelagert, so kann der selbstkalibrierende Werkzeugbereich auch mehrere miteinander fluchtende Öffnungen in einem Arbeitsgang aufweiten.

Das erfindungsgemäße Lagerelement hat den Vorteil, daß es ohne ein aufwendiges Ziehwerkzeug in einfacher Weise von einer Seite in die Öffnung des auf dem Lagerungsabschnitt zu lagernden Bauteils einzuführen ist. Durch eine einfach zu realisierende Rotation kann das Lagerelement wie eine Schraube in die Öffnung eingeschraubt werden. Dabei schneidet der selbstkalibrierende Werkzeugbereich, der in Einführrichtung vor dem Lagerungsabschnitt auf dem Lagerelement angeordnet ist, die Öffnung auf das gewünschte Maß.

Die axiale Ausdehnung des selbstkalibrierenden Werkzeugbereichs ist gegenüber einem als Räumnadel ausgeführten Werkzeug gering, so daß der Werkzeugbereich auch nach der Montage an dem Lagerelement verbleiben kann.

In einer vorteilhaften Ausgestaltung der Erfindung besteht der selbstkalibrierende Werkzeugbereich aus einem in Einführrichtung des Lagerelementes vorderen Bereich mit einer konisch umlaufenden Mantelfläche und einem sich daran anschließenden hinteren Bereich mit einer zylindrischen Mantelfläche, wobei auf dem Umfang beider Mantelflächen eine Verzahung angeordnet ist. Eine derartige Verzahnung hat den Vorteil, daß sich der selbstkalibrierende Werkzeugbereich durch den konischen Teil selbst zentriert. Der konische Teil des selbstkalibrierenden Werkzeugbereichs übernimmt dabei die Hauptschnittarbeit, während der zylindrische Teil des selbstkalibrierenden Werkzeugbereichs der Feinbearbeitung und der Führung dient.

In einer davon abweichenden Ausgestaltung der Erfindung besteht der selbstkalibrierende Werkzeugbereich aus einer Verzahnung an einer Stirnfläche. Dadurch ergibt sich in axialer Richtung ein sehr kurzer Werkzeugbereich, der beispielsweise direkt an der Stirnseite des Lagerungsabschnitts angebracht werden kann.

Es sind auch Varianten denkbar, bei denen der selbstkalibrierende Werkzeugbereich aus einer Kombination aus einer Verzahnung der Mantelfläche und einer Verzahnung der Stirnfläche besteht.

Vorzugsweise ist der selbstkalibrierende Werkzeugbereich gerändelt. Mit diesem Umformverfahren lassen sich in einfacher Weise sehr hohe Maßgenauigkeiten und sehr gute Oberflächen herstellen.

In einer weiteren Ausführungsform weist das Lagerelement einen Kopf mit Formschlußelementen zum Angriff eines drehenden Werkzeuges auf, der einen größeren Querschnitt als der Lagerungsabschnitt hat und damit zur axialen Festlegung des Lagerelementes beitragen kann. Der Kopf verfügt beispielsweise über ein Innenprofil, wie z.B. Innensechskant, Innenvierkant, Innendreikant, Torx, Kreuzschlitz oder Schlitz. Die Erfindung schließt jedoch auch Varianten ein, bei denen der Kopf über ein Außenprofil, wie z.B. über ein Außensechskantprofil verfügt.

Mittels eines geeigneten Werkzeugs, das formschlüssig in das Innenprofil oder um das Außenprofil greift kann die rotatorische Schnittbewegung des Lagerelements erzeugt werden. Diese kann beispielsweise mit einem motorischen Werkzeug wie z.B. einem elektrisch betriebenen Schrauber oder mit einem manuell handzuhabenden Werkzeug, wie z.B. einem Schraubendreher, aufgebracht werden.

In einer vorteilhaften Ausführungsform ist der Durchmesser des selbstkalibrierenden Werkzeugbereiches gleich dem Durchmesser der Lagerungsabschnittes, so daß eine Übergangspassung zwischen der Öffnung und dem Lagerungsabschnitt herstellbar ist. In der Praxis ist je nach Toleranz und gewählter Übergangspassung entweder ein minimales Spiel oder ein minimales Übermaß vorhanden.

Der Außendurchmesser des selbstkalibrierenden Werkzeugbereichs kann jedoch ebenso kleiner als der Außendurchmesser des Lagerungsabschnitts ausgebildet sein, so daß die Öffnung des Bauteils nach der Bearbeitung durch den selbstkalibrierenden Werkzeugbereich ebenfalls kleiner ist als der Lagerungsabschnitt. Je nach Größe des gewählten Durchmesserunterschieds (Übermaß) zwischen Lagerungsabschnitt und Öffnung können mehr oder weniger straffe und drehfeste Verbindungen zwischen dem Lagerungsabschnitt und der Öffnung hergestellt werden.

In einer Variante ist mittels des selbstkalibrierenden Werkzeugbereichs eine Spielpassung zwischen der Öffnung und dem Lagerungsabschnitt herstellbar. Der Außendurchmesser des selbstkalibrierenden Werkzeugbereichs ist dabei größer als der Außendurchmesser des Lagerungsabschnitts, so daß die Öffnung des Bauteils nach der Bearbeitung durch den selbstkalibrierenden Werkzeugbereich ebenfalls größer ist als der Lagerungsabschnitt. Zwischen dem Lagerungsabschnitt und der Öffnung ist ein definiertes Spiel vorhanden, so daß eine leicht drehbare Lagerung des Bauteils auf dem Lagerelement möglich ist.

In einer anderen Ausführungsform weist der Lagerungsabschnitt des Lagerelements eine höhere Oberflächenhärte auf als die Öffnung des auf dem Lagerungsabschnitt zu lagernden Bauteils. Dadurch wird ein Verschleiß des Lagerelements bei einer drehbaren Lagerung eines oder mehrerer Bauteile auf dem Lagerungsabschnitt verringert. Vorzugsweise wird eine hohe Oberflächenhärte durch Einsatzhärten des Lagerelements erreicht. Dieses Verfahren erzielt eine erhöhte Oberflächenhärte bei guter Zähigkeit des Kerns und führt gleichzeitig zu einer verbesserten Dauerschwingfestigkeit des Lagerelements, was sich z.B. bei häufigen Lastwechseln positiv auf die Sicherheit und Lebensdauer der Verbindung auswirkt.

Zudem führt eine Oberflächenhärtung des Lagerelements zu einer Verbesserung der Schneidfähigkeit des selbstkalibrierenden Werkzeugbereichs.

In einer Variante weist das Lagerelement einen Gewindezapfen oder eine sich axial erstreckende Sacklochbohrung mit einem Innengewinde auf. Durch diese Mittel und durch eine daran zu befestigende Mutter oder Schraube ist das Lagerelement axial festlegbar.

In einer weiteren Variante verfügt das Lagerelement über eine sich axial erstreckende Durchgangsbohrung, die vorzugsweise Abschnitte mit unterschiedlichen Durchmessern aufweist. Durch diese Ausgestaltung ist es z.B. möglich, das Lagerelement als Buchse zu verwenden, innerhalb der ein weiteres Bauteil drehbar oder drehfest gelagert werden kann.

Weiterhin kann mittels des Lagerelements eine Aufdrückhülse, insbesondere eine Spalthülse, einerseits in die aufgeweitete Öffnung und andererseits auf dem Lagerungsabschnitt positioniert werden. Eine derartige Hülse kann, vor dem Einführen des Lagerelements in die Öffnung, auf den Lagerungsabschnitt gesteckt werden und ist dann zusammen mit dem Lagerungsabschnitt in die durch den selbstkalibrierenden Werkzeugbereich bearbeitete Öffnung einzuführen. Die Hülse, die beispielsweise aus einem besonders verschleißfesten Material besteht, kann z.B. mit der bearbeiteten Öffnung eine Preßpassung bilden, während sich der Lagerungsabschnitt innerhalb der Hülse leicht drehen läßt.

Weitere Vorteile ergeben sich aus den nachfolgend beschriebenen Ausführungsbeispielen. Es zeigen:
- Fig.1a: eine Seitenansicht und eine Draufsicht eines mit Schneiden an einer Mantelfläche ausgestatteten Lagerelements bei der Bearbeitung einer Öffnung
- Fig.1b: ein Lagerelement nach Fig.1a im montierten Zustand,
- Fig. 2a: eine Seitenansicht und eine Draufsicht eines mit Schneiden an einer Stirnfläche ausgestatteten Lagerelements bei der Bearbeitung einer Öffnung,
- Fig.2b: ein Lagerelement nach Fig.2a im montierten Zustand,
- Fig. 3a: ein Lagerelement zur Erzeugung einer Preßpassung,
- Fig.3b: ein Lagerelement zur Erzeugung einer Spielpassung,
- Fig.3c: ein Lagerelement zur Erzeugung einer Übergangspassung,
- Fig.4: ein Lagerelement mit einer Sacklochbohrung
- Fig. 5: ein Lagerelement, das eine Spalthülse in die bearbeiteten Öffnungen zweier Bauteile einführt.

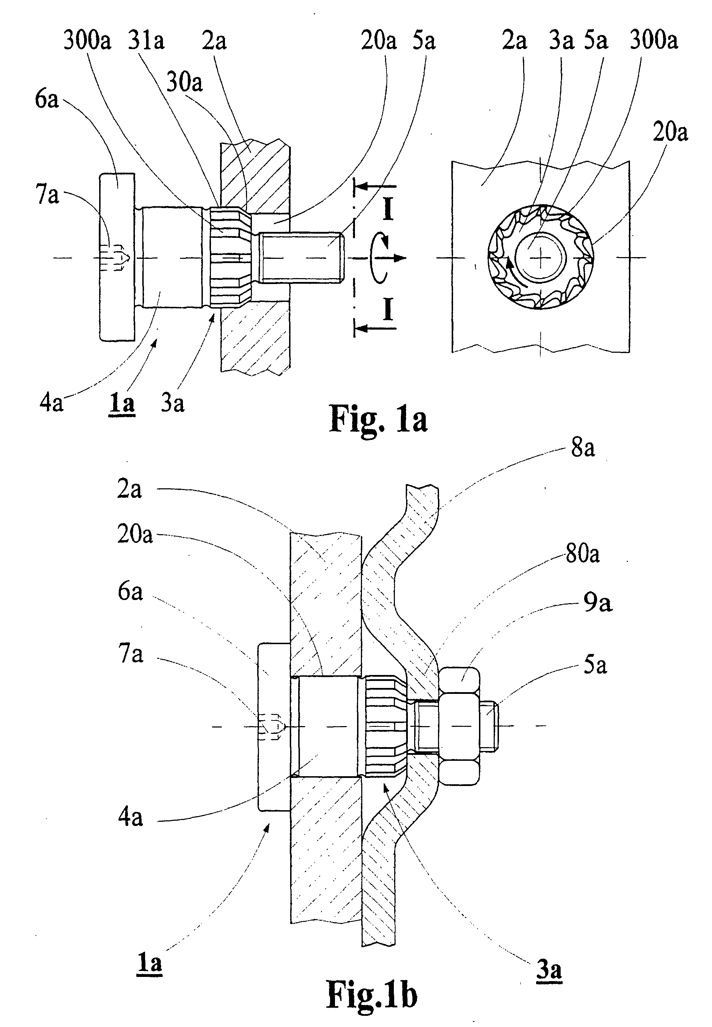

In Figur 1a ist in einer Seiten- und in einer Vorderansicht ein erstes Ausführungsbeispiel eines Lagerelements 1a dargestellt, wie es in eine Öffnung 20a eines Bauteils 2a eingeführt wird. Das Lagerelement 1a weist einen Schaft mit einem selbstkalibrierenden Werkzeugbereich 3a, einem Lagerungsabschnitt 4a, einem mit einem Außengewinde versehenen Gewindebolzen 5a und einem Kopf 6a mit einem Innenprofil 7a auf. Der selbstkalibrierende Werkzeugbereich 3a besteht aus einer Verzahnung am Umfang einer konisch verlaufenden Mantelfläche 30a und aus einer Verzahnung am Umfang einer zylindrisch verlaufenden Mantelfläche 31a. An den beiden Mantelflächen 30a, 31a weist der selbstkalibrierende Werkzeugbereich 3a mehrere voneinander beabstandete Schneiden 300a auf. Die Schneiden 300a sind durch Rändeln am Umfang des Lagerelements 1a erzeugt worden.

Die Öffnung 20a des Bauteils 2a weist gegenüber dem Lagerungsabschnitt 4a ein Untermaß auf, d.h. der Durchmesser der Öffnung 20a ist kleiner als der Durchmesser des Lagerungsabschnitts 4a. Vor dem Aufstecken des Bauteils 2a auf den Lagerungsabschnitt 3a wird die Öffnung 20a deshalb von dem selbstkalibrierenden Werkzeugbereich 3a des Lagerelements 1a in einem mit dem Reiben, Fräsen oder Bohren vergleichbaren spanenden bzw. oberflächenglättenden Bearbeitungsverfahren auf eine der gewünschten Passung entsprechende Größe aufgeweitet. Dazu muß das Lagerelement 1a eine rotatorische Schnittbewegung und eine lineare, in axiale Richtung weisende Vorschubewegung ausführen. Diese Bewegungen sind in Fig.1a durch Pfeile angedeutet.

Die in Fig. 1a rechts dargestellte Draufsicht auf das Lagerelements 1a entspricht der Blickrichtung I-I aus der links dargestellten Seitenansicht, wobei im Gegensatz zur Seitenansicht in der Draufsicht die Bearbeitung der Öffnung 20a durch den selbstkalibrierenden Werkzeugbereich 3a bereits abgeschlossen ist. In der Draufsicht ist eine sägezahnartige Anschrägung der Schneiden 300a zu erkennen, die bei der spanenden Bearbeitung der Öffnung 20a eine bestimmte Eindrehrichtung (Pfeil) des Lagerelements 1a in die Öffnung 20a des Bauteils 2a festlegen.

In Fig. 1b sind das in Fig.1a dargestellte Lagerelement 1a und das von diesem mit dem selbstkalibrierenden Werkzeugbereich 3a bearbeitete Bauteil 2a an einem Rahmenteil 8a befestigt. Das Bauteil 2a ist mit seiner Öffnung 20a auf dem Lagerungsabschnitt 4a spielfrei und drehbar gelagert. Das Lagerelement 1a ist mittels einer auf den Gewindebolzen 5a aufgeschraubten Mutter 9a drehfest mit dem Rahmenteil 8a verbunden. Das Bauteil 2a ist zwischen dem Kopf 6a und dem Rahmenteil 8a axial festgelegt.

Der selbstkalibrierende Werkzeugbereich 3a ist außerhalb der bearbeiteten Öffnung 20a plaziert und wird von einer Ausbeulung 80a des Rahmenteils 8a umschlossen.

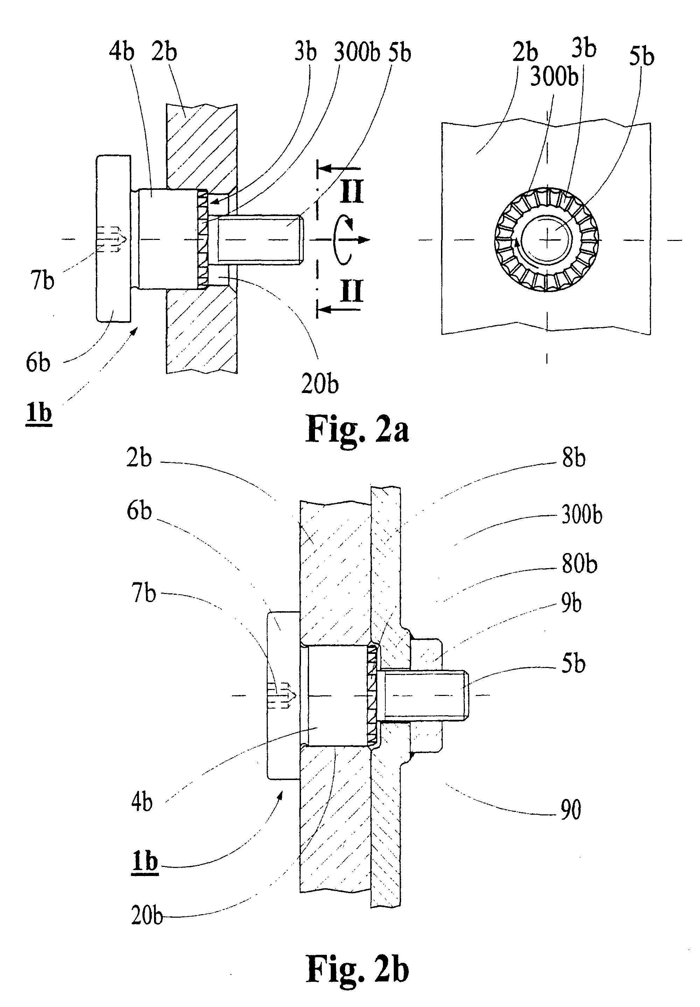

Das in Fig.2a dargestellte Ausführungsbeispiel zeigt, ebenso wie Fig. 1a, ein Lagerelement 1b in einer Seitenund in einer Vorderansicht, wie es in eine mit einem Untermaß versehene Öffnung 20b eines Bauteils 2b eingeführt wird. Das Lagerelement 1b weist einen selbstkalibrierenden Werkzeugbereich 3b, einen Lagerungsabschnitt 4b, einen mit einem Außengewinde versehenen Gewindebolzen 5b und einen Kopf 6b mit einem Innenprofil 7b auf. Der selbstkalibrierende Werkzeugbereich 3b verfügt über radial verlaufende Schneiden 300b, die an eine Stirnseite des Lagerungsabschnitts 4b durch Rändeln angeformt sind. Die links in Fig. 2a dargestellte Seitenansicht zeigt das Lagerelement 1b während des Bearbeitungsvorgangs. Die rechts dargestellte Draufsicht zeigt entsprechend der Blickrichtung II-II den selbstkalibrierenden Werkzeugbereich 3b an der Stirnseite des Lagerungsabschnitts 4b nach Beendigung der Bearbeitung. Die Eindrehrichtung ist in beiden Darstellungen durch Pfeile angegeben.

Ähnlich wie in Fig. 1b sind in Fig.2b das in Fig.2a dargestellte Lagerelement 1b und das von diesem mit dem selbstkalibrierenden Werkzeugbereich 3b bearbeitete Bauteil 2b an einem Rahmenteil 8b befestigt. Das Bauteil 2b ist mit seiner bearbeiteten Öffnung 20b auf dem Lagerungsabschnitt 4b spielfrei und drehbar gelagert. Das Rahmenteil 8b weist auf seiner dem Bauteil 2b abgewandten Rückseite eine Mutter 9b auf, die durch eine Schweißnaht 90 stoffschlüssig mit dem Rahmenteil 8b verbunden ist und in die der Gewindebolzen 5b des Lagerelements 1b eingeschraubt wird. Das Bauteil 2b ist zwischen dem Kopf 6b und dem Rahmenteil 8b axial festgelegt.

Da sich die Schneiden 300b des selbstkalibrierenden Werkzeugbereichs 3b nur an der Stirnseite des Lagerungsabschnitts 4b befinden, ist die axiale Ausdehnung des selbstkalibrierenden Werkzeugbereichs 3b gegenüber dem in Fig.1a und 1b dargestellten selbstkalibrierenden Werkzeugbereich 3a wesentlich geringer. Das in Fig.2b dargestellte Lagerelement 1b wird bei der Montage deshalb von einer weniger ausgeprägten Ausbeulung 80b des Rahmenteils 8b umschlossen als bei dem in der Fig. 1b dargestellten Ausführungsbeispiel.

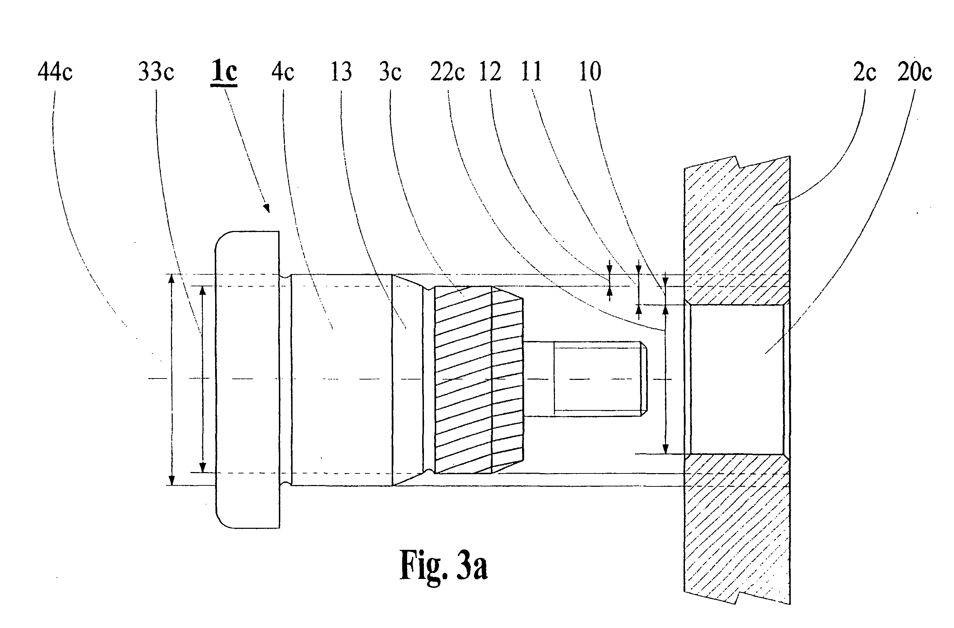

In Fig.3a ist ein erfindungsgemäßes Lagerelement 1c dargestellt, das zusammen mit der noch aufzuweitenden Öffnung 20c des Bauteils 2c eine Preßpassung erzeugt.

Das Lagerelement 1c weist einen Lagerungsabschnitt 4c und einen selbstkalibrierenden Werkzeugbereich 3c auf. Der Durchmesser dₗ 44c des Lagerungsabschnitts 4c ist größer als der Durchmesser d_{w} 33c des selbstkalibrierenden Werkzeugbereichs 3c. Der Durchmesser D_{b} 22c der Öffnung 20c ist vor der Aufweitung durch das Lagerelement kleiner als der Durchmesser dₗ 44c des Lagerungsabschnitts 4c und kleiner als der Durchmesser d_{w} 33c des selbstkalibrierenden Werkzeugbereichs 3c. Die nicht bearbeitete Öffnung 20c weist demnach gegenüber dem selbstkalibrierenden Werkzeugbereich 3c ein zu zerspanendes Untermaß (d_{w}-D_{b}) auf, das doppelt so groß ist wie die in Fig.3a dargestellte Radiusdifferenz (r_{w}-R_{b}) 10. Gegenüber dem Durchmesser des Lagerungsabschnitts weist die unbearbeitete Öffnung ein Untermaß (dₗ-D_{b}) auf, das doppelt so groß ist wie die in Fig.3a dargestellte Radiusdifferenz (r₁-R_{b}) 11.

Nach der spanenden Bearbeitung der Öffnung 20c durch den selbstkalibrierenden Werkzeugbereich 3c entspricht der Durchmesser D_{b} der Öffnung 20c dem Durchmesser d_{w} des selbstkalibrierenden Werkzeugbereichs 3c. Da der Lagerungsabschnitt 4c gegenüber der bearbeiteten Öffnung 20c ein Übermaß (dₗ-d_{w}) aufweist, liegt eine Preßpassung zwischen dem Lagerelement 1c und dem Bauteil 2c vor. Das Übermaß (dₗ-d_{w}) ist doppelt so groß wie die in Fig.3a dargestellte Radiusdifferenz (rₗ-r_{w}) 12.

Damit der Lagerungsabschnitt 4c besser in die kleinere bearbeitete Öffnung 20c eingeführt werden kann, weist er einen konisch ausgeführten Einführbereich 13 auf. Das Lagerelement ist in Bezug auf seine axialen Abmessungen so ausgeführt, daß der Lagerungsabschnitt 4c erst nach Beendigung des Bearbeitungsvorgangs in die bearbeitete Öffnung 20c eingreift. Dadurch ist eine ungestörte rotatorische Bearbeitung der Öffnung 20c gewährleistet, ohne daß die bei einer Preßpassung auftretenden Klemmkräfte überwunden werden müssen.

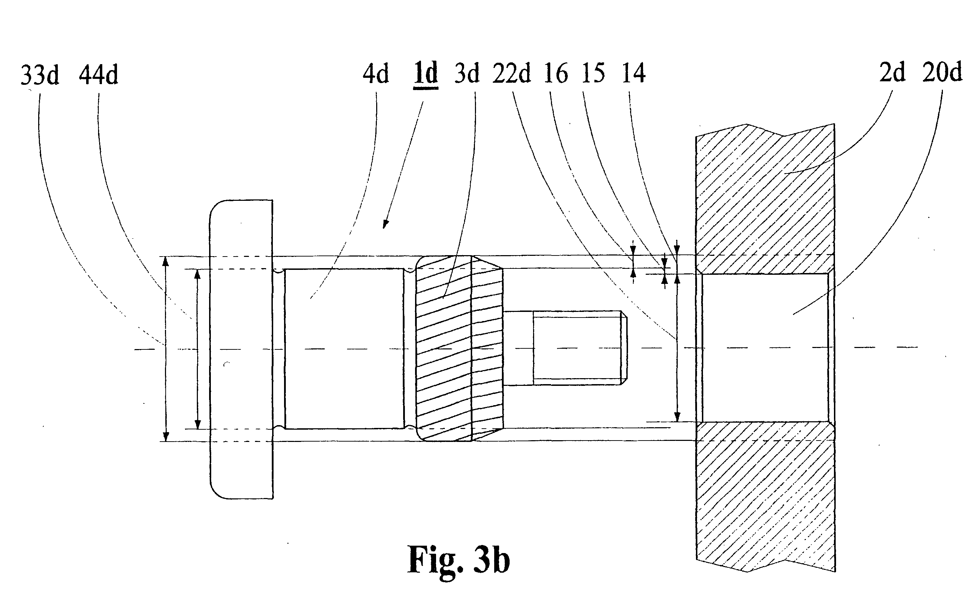

In Fig. 3b ist ein erfindungsgemäßes Lagerelement 1d dargestellt, das zusammen mit der noch aufzuweitenden Öffnung 20d des Bauteils 2d eine Spielpassung erzeugt.

Das Lagerelement 1d weist einen Lagerungsabschnitt 4d und einen selbstkalibrierenden Werkzeugbereich 3d auf. Der Durchmesser dₗ 44d des Lagerungsabschnitts 4d ist kleiner als der Durchmesser d_{w} 33d des selbstkalibrierenden Werkzeugbereichs 3d. Der Durchmesser D_{b} 22d der Öffnung 20d ist vor der Aufweitung durch das Lagerelement kleiner als der Durchmesser dₗ 44d des Lagerungsabschnitts 4d und kleiner als der Durchmesser d_{w} 33d des selbstkalibrierenden Werkzeugbereichs 3d. Die nicht bearbeitete Öffnung 20d weist gegenüber dem selbstkalibrierenden Werkzeugbereich 3d ein zu zerspanendes Untermaß (d_{w}-D_{b}) auf, das doppelt so groß ist wie die in Fig.3b dargestellte Radiusdifferenz (r_{w}-R_{b}) 14. Gegenüber dem Durchmesser des Lagerungsabschnitts weist die unbearbeitete Öffnung ein Untermaß (d₁-D_{b}) auf, das doppelt so groß ist wie die in Fig.3b dargestellte Radiusdifferenz (r₁-R_{b}) 15.

Nach der spanenden Bearbeitung der Öffnung 20d durch den selbstkalibrierenden Werkzeugbereich 3d entspricht der Durchmesser D_{b} der Öffnung 20d dem Durchmesser d_{w} des selbstkalibrierenden Werkzeugbereichs 3c. Da die bearbeitete Öffnung 20d gegenüber dem Lagerungsabschnitt 4d ein Spiel D_{w}-Dₗ aufweist, liegt eine Spielpassung zwischen dem Lagerungsabschnitt 4d des Lagerelements 1d und dem Bauteil 2d vor. Das Spiel (D_{w}-Dₗ) ist doppelt so groß wie die in Fig.3b dargestellte Radiusdifferenz (R_{w}-Rₗ) 16.

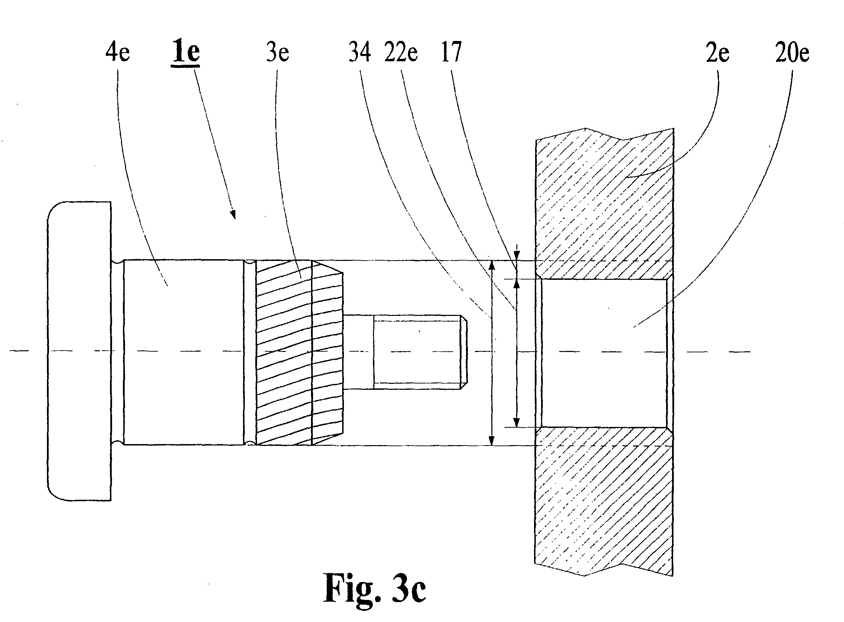

In Fig.3c ist ein erfindungsgemäßes Lagerelement 1e dargestellt, bei dem der Durchmesser dₗ des Lagerungsabschnitts 4e gleich dem Durchmesser d_{w} des selbstkalibrierenden Werkzeugbereichs 3e ist. Der Durchmesser D_{b} 22e der Öffnung 20e ist vor der Aufweitung durch das Lagerelement kleiner als der gemeinsame Durchmesser d_{lw} 34 des Lagerungsabschnitts 4e und des selbstkalibrierenden Werkzeugbereichs 3e. Die nicht bearbeitete Öffnung 20e weist demnach gegenüber dem selbstkalibrierenden Werkzeugbereich 3e ein zu zerspanendes Untermaß (d_{lw}-D_{b}) auf, das doppelt so groß ist wie die in Fig.3a dargestellte Radiusdifferenz (r_{lW}-R_{b}) 17.

Nach der spanenden Bearbeitung der Öffnung 20e durch den selbstkalibrierenden Werkzeugbereich 3e entspricht der Durchmesser D_{b} der Öffnung 20e dem Durchmesser d_{w} des selbstkalibrierenden Werkzeugbereichs 3e und somit auch dem Durchmesser dₗ des Lagerungsabschnitts 4e. Zwischen dem Lagerungsabschnit 4e und der bearbeiteten Öffnung 20e ist somit weder Spiel noch Übermaß vorhanden. Es handelt sich um eine Übergangspassung.

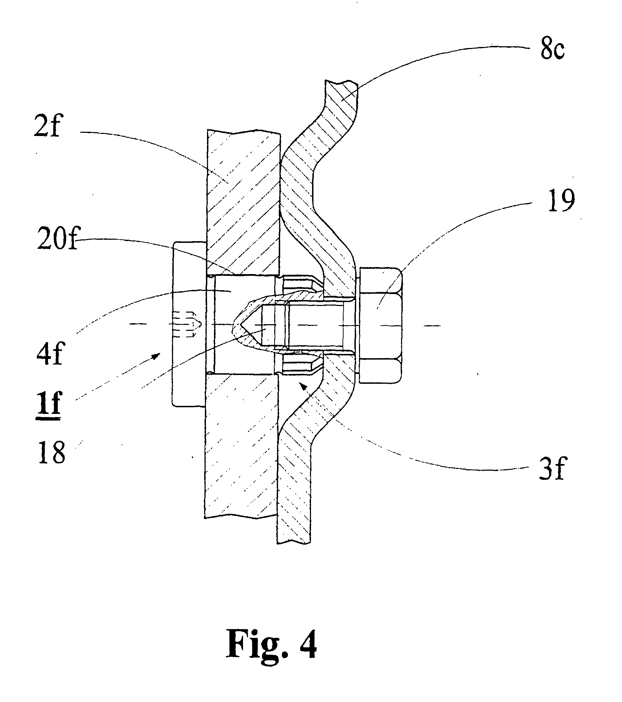

Fig. 4 zeigt in einer teilweise geschnitten Darstellung ein Lagerelement 1f, das wie in Fig 1b zusammen mit einem Bauteil 2f an einem Rahmenteil 8c befestigt ist. Ähnlich wie in Fig. 1a ist das Bauteil 2f zuvor durch einen selbstkalibrierenden Werkzeugbereich 3f des Lagerelements 1f bearbeitet worden, damit es mit einer Öffnung 20f auf dem Lagerungsabschnitt 4f des Lagerelements 1f ohne Spiel gelagert werden kann. Das Lagerelement 1f weist im Unterschied zu Fig.1b eine Sacklochbohrung 18 mit einem Innengewinde auf und ist mittels einer in die Sacklochbohrung 18 eingeschraubten Schraube 19 drehfest mit dem Rahmenteil 8c verbunden.

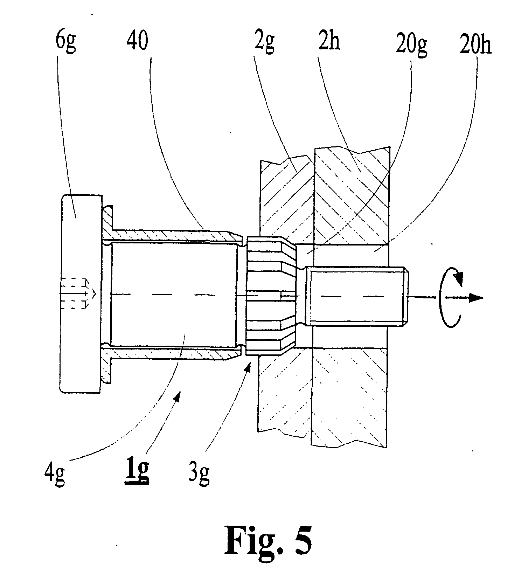

In Fig.5 ist auf dem Lagerungsabschnitt 4g eine Spalthülse 40 gesteckt, die zusammen mit einem Lagerelement 1g in zwei durch einen selbstkalibrierenden Werkzeugbereich 3g bearbeitete Öffnungen 20g, 20h zweier Bauteile 2g, 2h gesteckt wird. Die Spalthülse 40, in der ein Lagerungsabschnitt 4g des Lagerelements 1g mit Spiel gelagert ist, bildet zusammen mit den Öffnungen 20g, 20h eine Preßpassung, da der Durchmesser des selbstkalibrierenden Werkzeugbereichs 3g kleiner als der Außendurchmesser der Spalthülse 40 ist. Die Spalthülse 40 wird durch einen Kopf 6g des Lagerelements 1g in die durch den selbstkalibrierenden Werkzeugteil 3g aufgeweiteten und miteinander fluchtenden Öffnungen 20g, 20h der beiden Bauteile 2g, 2h eingepreßt.

## Patentansprüche

1. Selbstkalibrierendes Lagerelement (1a-1g) für Verstelleinrichtungen in Kraftfahrzeugen mit einem Lagerungsabschnitt (4a-4g) zur Lagerung mindestens eines Getriebeelements (2a-2h) der Verstelleinrichtung, wobei das Lagerelement (1a-1g) einen zumindest eine Schneide (300a, 300b) aufweisenden Werkzeugbereich (3a-3g) umfaßt, mit dem eine Öffnung (20a-20h) des Getriebelements (2a-2h) auf den zu dessen Lagerung auf dem Lagerungsabschnitt (4a-4g) erforderlichen Durchmesser aufweitbar ist,
**dadurch gekennzeichnet,**
**daß** die Schneide (300a, 300b) des Werkzeugbereiches (3a-3g) derart angeordnet ist, daß der Durchmesser der Öffnung (20a-20h) mittels einer Rotationsbewegung des Lagerelements (1a-1g) um seine Längsachse aufweitbar ist und daß sich an den Werkzeugbereich (3a-3g) der Lagerungsabschnitt (4a-4g) des Lagerelements (1a-1g) zur drehbaren Lagerung des Getriebeelementes (2a-2h) anschließt.

2. Lagerelement nach Auspruch 1, **dadurch gekennzeichnet, daß** der selbstkalibrierende Werkzeugbereich (3a-3g) aus einem in Einführrichtung vorderen Bereich mit einer konisch umlaufenden Mantelfläche (30a) und einem daran anschließenden hinteren Bereich mit einer zylindrischen Mantelfläche (31a) besteht und daß auf dem Umfang der Mantelflächen eine Verzahnung angebracht ist.

3. Lagerelement nach Anspruch 1, **dadurch gekennzeichnet, daß** der selbstkalibrierende Werkzeugbereich (3b) aus einer Verzahnung an einer Stirnfläche besteht.

4. Lagerelement nach Anspruch 2 und 3, **dadurch gekennzeichnet, daß** der selbstkalibrierende Werkzeugbereich (3a-3g) aus einer Kombination aus einer Verzahnung der Mantelfläche (30a, 31a) und der Stirnfläche besteht.

5. Lagerelement nach mindestens einem der vorangehenden Ansprüche, **dadurch gekennzeichnet, daß** der selbstkalibrierende Werkzeugbereich (3a-3g) gerändelt ausgebildet ist.

6. Lagerelement nach mindestens einem der voranstehenden Ansprüche, **dadurch gekennzeichnet, daß** das Lagerelement (1a-1g) einen Kopf (6a, 6b) mit Formschlußelementen zum Angriff eines drehenden Werkzeuges aufweist, der über einen größeren Querschnitt verfügt als der Lagerungsabschnitt (4a-4g).

7. Lagerelement nach Anspruch 6, **dadurch gekennzeichnet, daß** die Formschlußelemente als Innenprofil (7a, 7b) und/oder als Außenprofil ausgebildet sind.

8. Lagerelement nach mindestens einem der vorangehenden Ansprüche, **dadurch gekennzeichnet, daß** der Durchmesser des selbstkalibrierenden Werkzeugbereichs (3a-3g) gleich dem Durchmesser des Lagerungsabschnitts (4a-4g) ist.

9. Lagerelement nach mindestens einem der Ansprüche 1 bis 7, **dadurch gekennzeichnet, daß** der Durchmesser des selbstkalibrierenden Werkzeugbereichs (3a-3g) größer oder kleiner als der Durchmesser des Lagerungsabschnitts (4a-4g) ist.

10. Lagerelement nach mindestens einem der vorangehenden Ansprüche, **dadurch gekennzeichnet, daß** der Lagerungsabschnitt (4a-4g) des Lagerelements (1a-1g) eine höhere Oberflächenhärte aufweist als die Öffnung (20a-20h) des auf dem Lagerungsabschnitt (4a-4g) zu lagernden Bauteils (2a-2h).

11. Lagerelement nach Ansprüche 10, **dadurch gekennzeichnet, daß** das Lagerelement (1a-1g) einsatzgehärtet ist.

12. Lagerelement nach mindestens einem der vorangehenden Ansprüche, **dadurch gekennzeichnet, daß** das Lagerelement (1a-1g) einen Gewindezapfen (5a, 5b) aufweist.

13. Lagerelement nach mindestens einem der vorangehenden Ansprüche, **dadurch gekennzeichnet, daß** das Lagerelement (1a-1g) eine sich axial erstreckende Sacklochbohrung (18) mit einem Innengewinde aufweist.

14. Lagerelement nach mindestens einem der Ansprüche 1 bis 12, **dadurch gekennzeichnet, daß** das Lagerelement (1a-1g) eine sich axial erstreckende Durchgangsbohrung aufweist

15. Lagerelement nach Anspruch 14, **dadurch gekennzeichnet, daß** die Durchgangsbohrung Abschnitte mit unterschiedlichen Durchmessern aufweist.

16. Lagerelement nach einem der Ansprüche 14 oder 15, **dadurch gekennzeichnet, daß** das Lagerelement (1a-1g) als Buchse ausgebildet ist.

17. Lagerelement nach mindestens einem der vorangehenden Ansprüche, **dadurch gekennzeichnet, daß** in montiertem Zustand eine Aufdrückhülse, insbesondere eine Spalthülse (40), zwischen der aufgeweiteten Öffnung (20a-20h) und dem Lagerungsabschnitt (4a-g) angeordnet ist.

## Claims

1. A self-calibrating bearing component (la - 1g) for adjustment devices in vehicles with a journalling section (4a - 4g) for the purpose of journalling at least one drive component (2a - 2h) of the adjustment device, whereby the bearing component (1a - 1g) has a tool area (3a - 3g) with at least one cutting edge (300a, 300b), whereby with this tool area (3a - 3g) an opening (20a - 20h) of the drive component (2a - 2h) can be enlarged to the necessary diameter for journalling on the journalling section (4a - 4g)
**characterised in that**
the cutting edge (300a, 300b) of the tool area (3a - 3g) is positioned in such a way that the diameter of the opening (20a - 20h) can be enlarged by means of a rotation movement of the bearing component (1a - 1g) around its longitudinal axis, and whereby the journalling section (4a - 4g) of the bearing component (1a - 1g) for the purpose of the rotating journalling of the drive component (2a - 2h) attaches to the tool area (3a - 3g).

2. A bearing component according to Claim 1, **characterised in that** the self-calibrating tool area (3a - 3g) consists of a front area in the insertion direction with a conical surface shell (30a) and a back area attaching thereto with a cylindrical surface shell (31a), and whereby there is toothing on the perimeter of the surface shells.

3. A bearing component according to Claim 1, **characterised in that** the self-calibrating tool area (3b) consists of toothing on a front surface.

4. A bearing component according to Claim 2 and Claim 3, **characterised in that** the self-calibrating tool area (3a - 3g) consists of a combination of toothing of the surface shell (30a, 31a) and of the front surface.

5. A bearing component according to at least one of the preceding claims, **characterised in that** the self-calibrating tool area (3a - 3g) is formed in a knurling way.

6. A bearing component according to at least one of the preceding claims, **characterised in that** the bearing component (1a - 1g) has a head (6a, 6b) with positively interlocking components for gripping a rotating tool, whereby this head (6a, 6b) has a larger cross-section than the journalling section (4a - 4g).

7. A bearing component according to Claim 6, **characterised in that** the positively interlocking components are formed as an inner profile (7a, 7b) and/or as an outer profile.

8. A bearing component according to at least one of the preceding claims, **characterised in that** the diameter of the self-calibrating tool area (3a - 3g) is equal to the diameter of the journalling section (4a - 4g).

9. A bearing component according to at least one of the Claims 1 to 7, **characterised in that** the diameter of the self-calibrating tool area (3a - 3g) is larger or smaller than the diameter of the journalling section (4a - 4g).

10. A bearing component according to at least one of the preceding claims **characterised in that** the journalling section (4a - 4g) of the bearing component (1a - 1g) has a higher upper surface hardness than the opening (20a - 20h) of the component (2a - 2h) to be journalled on the journalling section (4a - 4g).

11. A bearing component according to Claim 10, **characterised in that** the bearing component (1a - 1g) is case hardened.

12. A bearing component according to at least one of the preceding claims, **characterised in that** the bearing component (1a - 1g) has a threaded stem (5a, 5b).

13. A bearing component according to at least one of the preceding claims, **characterised in that** the bearing component (la- 1g) has an axially extending blind hole bore (18) with an inner thread.

14. A bearing component according to at least one of the Claims 1 to 12, **characterised in that** the bearing component (1a - 1g) has an axially extending through bore.

15. A bearing component according to Claim 14, **characterised in that** the through bore has sections with different diameters.

16. A bearing component according to one of the Claims 14 or 15, **characterised in that** the bearing component (1a - 1g) is formed as a bushing.

17. A bearing component according to at least one of the preceding claims, **characterised in that** in the assembled form there is a pressing sleeve, in particular a slot-like sleeve (40), between the enlarged opening (20a - 20h) and the journalling section (4a - 4g).

## Revendications

1. Elément de palier à auto-calibrage (1a-1g) pour des systèmes de réglage dans des véhicules automobiles, comportant un tronçon de montage (4a-4g) pour le montage d'au moins un élément de transmission (2a-2h) du système de réglage, l'élément de palier (1a-1g) comprenant une zone d'outil (3a-3g) présentant au moins un tranchant (300a-300b), par laquelle on peut élargir une ouverture (20a-20h) de l'élément de transmission (2a-2h) à un diamètre nécessaire à son montage sur le tronçon de montage (4a-4g),
**caractérisé en ce que**
le tranchant (300a-300b) de la zone d'outil (3a-3g) est agencé de telle sorte que le diamètre de l'ouverture (20a-20h) peut être élargi au moyen d'un mouvement de rotation de l'élément de palier (1a-1g) autour de son axe longitudinal, et **en ce que** le tronçon de montage (4a-4g) de l'élément de palier (1a-1g) se raccorde à la zone d'outil (3a-3g) pour monter en rotation l'élément de transmission (2a-2h).

2. Elément de palier selon la revendication 1, **caractérisé en ce que** la zone d'outil (3a-3g) à auto-calibrage est constituée par une zone antérieure en direction d'introduction avec une surface enveloppe (30a) périphérique conique et par une zone postérieure adjacente à celle-ci avec une surface enveloppe (31a) cylindrique et **en ce qu'**une denture est prévue sur la périphérie de la surface enveloppe.

3. Elément de palier selon la revendication 1, **caractérisé en ce que** la zone d'outil (3b) à auto-calibrage est constituée par une denture sur une surface frontale.

4. Elément de palier selon la revendication 2 et la revendication 3, **caractérisé en ce que** la zone d'outil (3a-3g) à auto-calibrage est constituée par une combinaison d'une denture de la surface enveloppe (30a, 31a) et de la surface frontale.

5. Elément de palier selon l'une au moins des revendications précédentes, **caractérisé en ce que** la zone d'outil (3a-3g) à auto-calibrage est réalisée moletée.

6. Elément de palier selon l'une au moins des revendications précédentes, **caractérisé en ce que** l'élément de palier (1a-1g) présente une tête (6a-6b) avec des éléments de coopération de formes pour l'attaque d'un outil rotatif, laquelle dispose d'une section transversale plus grande que le tronçon de montage (4a-4g).

7. Elément de palier selon la revendication 6, **caractérisé en ce que** les éléments à coopération de formes sont réalisés en tant que profil intérieur (7a, 7b) et/ou en tant que profil extérieur.

8. Elément de palier selon l'une au moins des revendications précédentes, **caractérisé en ce que** le diamètre de la zone d'outil (3a-3g) à auto-calibrage est égal au diamètre du tronçon de montage (4a-4g).

9. Elément de palier selon l'une au moins des revendications 1 à 7, **caractérisé en ce que** le diamètre de la zone d'outil (3a-3g) à auto-calibrage est plus grand ou plus petit que le diamètre du tronçon de montage (4a-4g).

10. Elément de palier selon l'une au moins des revendications précédentes, **caractérisé en ce que** le tronçon de montage (4a-4g) de l'élément de palier (1a-1g) présente une dureté de surface plus élevée que l'ouverture (20a-20h) du composant (2a-2h) à monter sur le tronçon de montage (4a-4g).

11. Elément de palier selon la revendication 10, **caractérisé en ce que** l'élément de palier (1a-1g) est cémenté.

12. Elément de palier selon l'une au moins des revendications précédentes, **caractérisé en ce que** l'élément de palier (1a-1g) présente un tourillon fileté (5a, 5b).

13. Elément de palier selon l'une au moins des revendications précédentes, **caractérisé en ce que** l'élément de palier (1a-1g) présente un trou borgne (18) s'étendant radialement, avec un taraudage.

14. Elément de palier selon l'une au moins des revendications 1 à 12, **caractérisé en ce que** l'élément de palier (1a-1g) présente un perçage traversant s'étendant axialement.

15. Elément de palier selon la revendication 14, **caractérisé en ce que** le perçage traversant présente des tronçons avec différents diamètres.

16. Elément de palier selon l'une ou l'autre des revendications 14 et 15, **caractérisé en ce que** l'élément de palier (1a-1g) est réalisé sous forme de coussinet.

17. Elément de palier selon l'une au moins des revendications précédentes, **caractérisé en ce qu'**à l'état monté, une douille d'emmanchement par pression, en particulier une douille fendue (40) est agencée entre l'ouverture élargie (20a-20h) et le tronçon de montage (4a-4g).
